# EUROPEAN PATENT APPLICATION

(11) **EP 1 130 279 A1**
(43) Date of publication of application: **05.09.2001**
(21) Application number: 00960992.6
(22) Date of filing: 13.09.2000
(51) Int. Cl.: F16F 7/12, B60R 21/04

(54) **SHOCK ABSORBING MEMBER, AUTOMOBILE INTERIOR MEMBER AND AUTOMOBILE DOOR TRIM**

(30) Priority: 13.09.1999 JP 25817399
(71) Applicant: IDEMITSU PETROCHEMICAL CO. Ltd., Tokyo 130-0015 (JP)
(72) Inventor: Gouda, Hirofumi, Ichihara-shi, Chiba 299-0107 (JP); Nomura, Manabu, Ichihara-shi, Chiba 299-0107 (JP); Shima, Toru, Ichihara-shi, Chiba 299-0107 (JP)
(74) Representative: Gille Hrabal Struck Neidlein Prop Roos
(86) International application number: JP0006274
(87) International publication number: WO0120189

(57) **Abstract**

The invention relates to a shock absorbing member used in an automobile interior member, especially an automobile door trim or the like because it is excellent in appearance, weight reduction, rigidity and shock absorbing property, has a simple structure and is excellent in economics. It is a shock absorbing member which is an integrally molded product comprising a plate portion and lattice-form ribs on a reverse surface of the plate portion and made of a fiber-containing thermoplastic resin, a porosity of the plate portion being 5 to 90 %. Specifically, it is formed of a polypropylene resin having a glass fiber content of 10 to 60 % by weight and a weight average fiber length of 1 to 20 mm.

## Description

### Technical Field

The present invention relates to a shock absorbing member which is used in an automobile interior member, especially an automobile door trim or the like, which is excellent in appearance, weight reduction, rigidity and shock absorbing property and which has a simple structure and is excellent in productivity and economics.

### Background of the Invention

In recent years, the increase in strength of a car body, installation of an airbag and the like have been attempted for improvement of safety against collision in automobiles. Further, in view of energy saving, environmental problems and the like, the reduction of a fuel consumption rate has been the most important matter, and the weight reduction of automobiles has been earnestly demanded to solve these problems. For the weight reduction of automobiles, conversion of metals to resins has been rapidly carried out in respective parts. In these automobile parts, thermoplastic resins such as a polypropylene resin and the like have been often used instead of ordinary fiberglass-reinforced thermosetting resins (FRP) from the aspects of recycling property, unification of materials and the like in addition to moldability, strength, rigidity and the like.

The weight reduction of automobile parts has been strictly required day by day, and attempts have been made to decrease the thickness of a molded product for the weight reduction of a molded product. In order to decrease the thickness of a molded product, it is however necessary to improve properties inherent in a resin, such as strength, rigidity and the like and also melt flowability. To this end, a large number of methods have been proposed in which for improving strength, rigidity and the like of a polypropylene resin, reinforcing agents such as other thermoplastic resins, thermoplastic elastomers, glass fibers and the like, and fillers such as talc and the like are added.

In recent years, with respect to the improvement of safety against collision in automobiles, high-level safety for protecting passengers has been increasingly demanded on ordinary head-on collision and also collision from the side (side collision). For securing safety of passengers against the side collision of automobiles, a door is the most important construction part.

The door trim has been so far mainly molded by injection molding using a polypropylene resin or the like. And, in order to cushion shock caused by side collision of automobiles, a shock-absorbing member is mounted between a door middle panel and a door trim. For example, (1) Japanese Patent Laid-Open No. 69,780/1993 indicates a product in which a hollow and particulate energy absorber undergoing plastic deformation or brittle fracture is inserted into a trim substrate. Further, (2) Japanese Utility Model Registration No. 259,345 indicates a vehicle door panel having a foam layer with cushioning property formed on a reverse surface of a skin material.

Further, (3) Japanese Patent Laid-Open No. 164,740/1996 discloses an automobile door trim which covers a door inner panel on a waist portion of a vehicle door along the same, which is constructed of a hollow body molded by blow molding, in which a foam obtained by injecting a foaming resin as a raw material into one side of the hollow body partitioned with a wall and foaming the same acts as a shock-absorbing portion. Still further, (4) Japanese Patent Laid-Open No. 11,829/1997 proposes that a vehicle interior member (shock absorbing member) comprising a middle partition plate made of a synthetic resin and lattice-form ribs made of a synthetic resin and integrally raised outwardly from both sides of the middle partition plate is inserted between a door middle panel and a door trim.

The method (4) is said to be excellent in productivity as compared with (1) to (3) because production is easy and assembling is labor-saving. However, the vehicle interior member having the lattice rib has to be injection-molded separately. In addition, a step of inserting the same between the door middle panel and the door trim or the like is needed. Thus, productivity is not altogether high.

Moreover, (5) Japanese Patent Laid-Open No. 66,981/1996 or the like naturally proposes that an automobile interior member having lattice-form ribs is integrally molded on a plate which is an automobile door trim body. However, the automobile door trim body is a thin plate molded article. When the lattice rib is injection-molded thereon using an integral mold, the thickness of the lattice portion is increased. Thus, cooling of the portion on which the lattice is formed is delayed, and sinkmark occurs on the surface of the door trim to worsen the appearance.

Accordingly, it can hardly be put to practical use as an automobile interior member. As a result, in case of (4) or (5), there was no choice but to employ a method in which a door trim and a shock absorbing member are produced substantially separately and these are assembled. Further, in order to prevent occurrence of sinkmark, it is one of selection methods that a thickness of a flat portion of a door trim is increased. However, this is against weight reduction and energy saving. A shock absorbing member having excellent appearance without occurrence of sinkmark while maintaining weight reduction, especially, an automobile interior member such as a door trim or the like has been in demand.

The invention is to provide a shock absorbing member which can be utilized as an automobile interior member such as an automobile door trim or the like, which is lightweight and of simple structure, which can cope with side collision and is excellent in productivity and which can markedly reduce the number of parts and save labor in a step of assembling a door.

### Disclosure of the Invention

Under these circumstances, the present inventors have assiduously conducted investigations on weight reduction, a molding material, a molding method and safety against side collision of an automobile door trim or the like, and have consequently found that an integrally molded shock absorbing member having excellent appearance without occurrence of sinkmark and warpage is obtained by employing a specific structure. This finding has led to the completion of the invention.

That is, the invention is:
(1) A shock absorbing member which is an integrally molded product comprising a plate portion and lattice-form ribs on a reverse surface of the plate portion and formed of a fiber-containing thermoplastic resin, an average porosity of the plate portion being 5 to 90 %.
(2) The shock absorbing member recited in (1), wherein the fiber content is 10 to 60 % by weight, and the weight average fiber length is 1 to 20 mm.
(3) The shock absorbing member recited in (1) or (3), wherein the thickness of the lattice rib is 0.5 to 3 mm, the lattice spacing is 10 to 80 mm, and the height is 5 to 100 mm.
(4) The shock absorbing member recited in any of (1) to (3), wherein the fibers are glass fibers, and the thermoplastic resin is a polypropylene resin.
(5) The shock absorbing member recited in any of (1) to (4), which is obtained by injection-molding a resin molding material comprising fiber-reinforced thermoplastic resin pellets having a total length of 3 to 100 mm and containing 10 to 90 % by weight of fibers having a length identical to this total length and arrayed in parallel with one another.
(6) An automobile interior member formed of the shock absorbing member recited in any of (1) to (5).
(7) An automobile door trim formed of the shock absorbing member recited in any of (1) to (5).

### Brief Description of the Drawings

Fig. 1 is a partial sectional front view showing an embodiment of a shock absorbing member of the invention.

Fig. 2 is a sectional view taken along line X-X of Fig. 1.

Fig. 3 is a conceptual sectional view of an automobile door having an embodiment of an automobile door trim of the invention inserted therein.

Fig. 4 is a conceptual sectional view showing an example of an ordinary automobile door having a shock absorbing member and a door trim inserted as separate members.

Fig. 5 is a conceptual view of a main part of a mold for molding a shock absorbing member, showing a fiber-containing molten resin when injection-filled.

Fig. 6 is a view when a step of inflation by widening a mold cavity is completed.

Further, in the drawings, numerals indicate the following. 1 is a shock absorbing member, 2 a plate portion, 3 a lattice-form rib, 4 an outer peripheral wall, 11 an automobile door trim, 12 a plate portion, 13 alattice-form rib, 14 an outer peripheral wall, 15 an ordinary door trim, 16 an ordinary shock absorbing member, 17 a door middle panel, 18 a door outside panel, 19 a door glass, 21 a fixed mold, 22 a movable mold, 23 a spacer, 24 a spring, 25 an injection nozzle, 26 a hot runner, 27 a gate, 28 a mold cavity, 29 a plate portion, 30 a lattice-form rib, 31 a gas injection tube, 32 a gas exhaust tube, and 33 a shock absorbing member.

### Best Mode for Carrying Out the Invention

The invention is described in detail below.

The shock absorbing member of the invention is, in view of occurrence of sinkmark and warpage, one which can be integrally molded using a fiber-containing thermoplastic resin instead of a combined structure comprising a plate portion and a molded product having lattice-form ribs mounted on a reverse surface of the plate portion.

The shock absorbing member of the invention is described below by referring to the drawings.

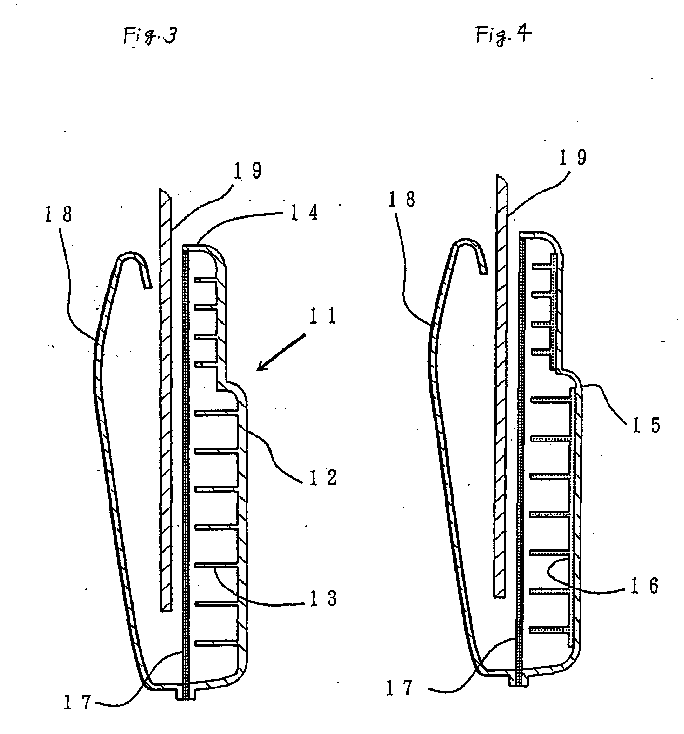

As is clear from Fig. 4, in an ordinary automobile door system, a door glass 19 which is vertically moved between a door outside panel 18 and a door trim 15 is mounted, and the door trim 15 is installed on a door middle panel 17 inside the door glass 19 to construct an automobile inner member. The door middle panel 17 is, like the door outside panel, made of a metal. Thus, it is a heavy panel, and serves also as an installation panel of a functional member having a lifting function of the door glass 19.

In the ordinary automobile door system, a shock absorbing member 16 in which a plate portion and lattice-form ribs are integrated is mounted between the door middle panel 17 and the door trim 15 to cope with accidents of side collision. As the shock absorbing member, there are a molded product having lattice-form ribs as shown in the drawing, a product made of a resin foam and the like.

Thus, in the ordinary automobile door trim, anyway, the door trim made of the resin was installed on the door middle panel made of the metal, and the shock-absorbing member was additionally combined to cope with the side collision. For this reason, the weight reduction as the automobile door is limited. Further, production, storage, transportation, assembly and step control of members are intricate. A better automobile door system has been in demand from the aspects of energy saving and labor saving.

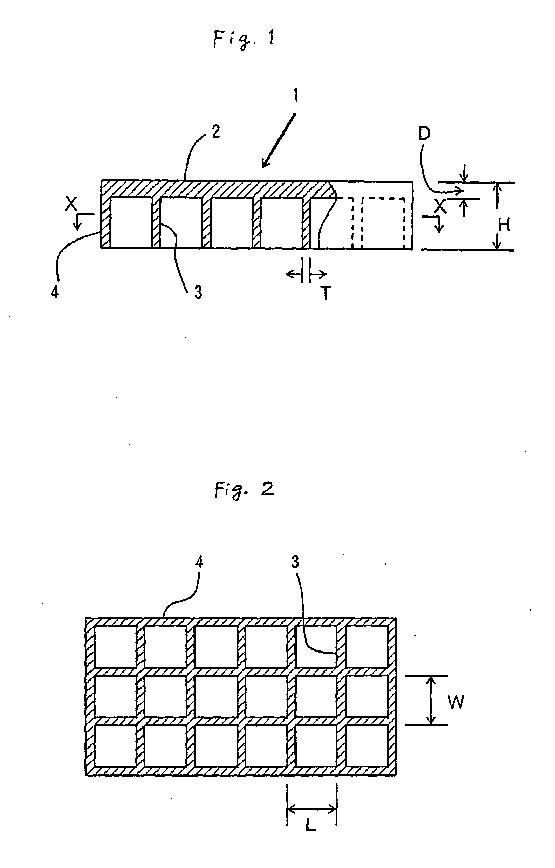

The shock absorbing member of the invention, as shown in Figs. 1 and 2, is an integrally molded product comprising a plate portion 2 and a lattice-form rib 3 and formed of a fiber-containing thermoplastic resin. It is a shock absorbing member in which an average porosity of the plate portion 2 is 5 to 90 %, preferably 10 to 80 %, more preferably 20 to 70 %. That is, it is an excellent shock absorbing member in which strength and rigidity are secured by using a thermoplastic resin containing fibers such as glass fibers or the like and pores of the plate portion eliminate the decrease in appearance or dimensional stability caused by occurrence of sinkmark ascribable to delay of cooling due to a thick cross rib portion and warpage deformation of the plate portion.

In the shock absorbing member of the invention, the size of each portion, the shape and the size of the lattice rib, the porosity of the plate portion and the like can optionally be determined according to the use, the size and the required properties of the shock absorbing member. Figs. 1 and 2 show an example in which the shock absorbing member has a box shape, an outer wall 4 is present on the outer peripheral portion and the plate portion is a flat plate. However, it may have a shape that the outer peripheral portion is deeper or shallower than the lattice rib, an outer wall is partially absent or a cap portion is provided. Further, the plate portion may have an optional surface such as a curved surface, a roughened surface, a wavy surface or the like according to the decorative surface of the shock absorbing member. In the plate portion, the thickness (D) of the main part is usually 1 to 30 mm, preferably 1.5 to 20 mm.

Next, in the lattice rib, the shape between lattices is a square shape, a rectangular shape, a rhombic shape or a combination of these shapes. The height (H) of the lattice rib is 10 to 60 mm, preferably 15 to 50 mm, and the thickness (T) of the rib is 0.5 to 3 mm, preferably 1 to 2.5 mm. These lattice ribs 3 are preferably tapered from a root 3a to an end 3b in view of releasability from a mold and appropriate buckling property of a rib cross portion. Further, a lattice spacing (W.L) of the lattice rib 3 is not particularly limited. It is 10 to 80 mm, preferably 15 to 60 mm. Incidentally, on the outer peripheral portion of the molded product within the lattice rib, a reinforcing wall which can be molded using a slide core and which is normal to the rib, namely, approximately parallel to the plate portion may be provided.

Since the shock absorbing member of the invention can be molded by injection-molding, the thickness of the plate portion, the thickness of the lattice rib, the height of the lattice rib, the shape and the spacing of the lattice rib which are the sizes of the respective portions of the shock absorbing member can be changed in the respective portions of the plate portion as required according to the use purpose of the shock absorbing member. Further, the porosity of the plate portion may also have a distribution.

The shock absorbing member of the invention is used in various fields. It is preferably used in an automobile interior member of which the appearance is deemed important, such as a door trim, a pillar, a side garnish or the like, especially in a door trim. As is clear from Fig. 4, in the ordinary automobile door system, the door trim 15 and the shock absorbing member 16 were separately molded, and integrated by secondary processing with a bonding material or a fitting.

Meanwhile, in the door trim 11 of the invention, the ordinary door trim 15 and shock absorbing member 16 are integrally molded by injection molding. For this reason, the secondary processing step for bonding is dispensed with, the weight reduction of the overall door trim is achieved, and the amount of the resin used is also decreased. A member made of a metal can also be inserted, as required, in the outer peripheral portion of the door trim 11 for installation in the door middle panel 17.

The thermoplastic resin used in the invention is not particularly limited. For example, polyolefin resins such as polypropylene, a propylene-ethylene block copolymer, a propylene·ethylene random copolymer, high-density polyethylene and the like, styrenic resins such as polystyrene, rubber-modified impact-resistant polystyrene, polystyrene having a syndiotactic structure, ABS resin, AS resin and the like, a polyvinyl chloride resin, a polyamide resin, a polyester resin, a polyacetal resin, a polycarbonate resin, polyphenylene sulfide, an aromatic polyether or polythioether resin, an aromatic polyester resin, a polystyrene resin, an acrylate resin and the like can be employed. The thermoplastic resins herein can be used singly, and may be used in combination.

Of these thermoplastic resins, polypropylene resins such as polypropylene, a propylene-ethylene block copolymer and the like, polyamide resins such as polyamide 6, polyamide 66 and the like, polyester resins such as polyethylene terephthalate, polybutylene terephthalate and the like are preferable.

It is preferred that these thermoplastic resins contain resins modified with unsaturated carboxylic acids such as maleic anhydride, fumaric acid, methacrylic acid and the like or derivatives thereof. Examples of the modified resins can include a polyolefin resin such as a polypropylene resin, a polyethylene resin or the like, a polyolefin elastomer and a polystyrene resin. The amount of the unsaturated carboxylic acid or its derivative in the modified resin is usually 0.01 to 10 % by weight. Further, the amount of the modified resin in the thermoplastic resin is usually 0.5 to 20 % by weight.

Next, the fibers used in the invention are not particularly limited, and are selected from various fibers having swelling property in melt kneading. Examples thereof include inorganic fibers such as glass fibers, carbon fibers and the like, metallic fibers such as copper fibers, brass fibers, steel fibers, stainless fibers, aluminum fibers, aluminum alloy fibers, titanium alloy fibers and the like, ceramic fibers such as boron fibers, silicon carbide fibers, alumina fibers, silicon titanate fibers, zirconia fibers and the like, aromatic fibers such as aramid fibers, polyoxymethylene fibers, aromatic polyester fibers, polyamide fibers, polyarylate fibers, polyphenylene sulfide fibers, polysulfone fibers, ultrahigh-molecular-weight polyethylene fibers and the like, and so forth. By the way, these fibers can also be, for example, a combination of two or more types of inorganic fibers and organic fibers.

These fibers can be selected, as required, according to characteristics required as the shock absorbing member. Of these, the glass fibers, the carbon fibers, the metallic fibers and the like are preferable because they are excellent in strength, rigidity and heat resistance, are long fibers and make easy the draw-molding by dipping in a molten resin. The glass fibers are used especially preferably.

First, in the shock absorbing member formed of the fiber-containing thermoplastic resin, the fiber content is preferably 10 to 60 % by weight, more preferably 15 to 50 % by weight, and the weight average fiber length is preferably 1 to 20 mm, more preferably 2 to 15 mm. When the fiber content herein is less than 10 % by weight, strength and rigidity are insufficient. Further, swelling property given by inflation-molding is sometimes decreased, which makes it difficult to provide the porosity of the plate portion. When it exceeds 60 % by weight, melt flowability in molding is sometimes decreased. Further, sometimes, appearance is decreased or the fiber-containing thermoplastic resin is hardly filled in the end of the lattice rib. It is therefore preferred to select the foregoing range.

Next, when the weight average fiber length is less than 1 mm, the weight reduction by securing pores which is the characteristic feature of the invention and the inflation moldability for an effect of preventing occurrence of sinkmark and warpage are decreased, and it is also unwanted in view of strength. Further, when it exceeds 20 mm, the melt flowability is decreased, and the kneading within a melt-kneading cylinder is unsatisfactory to decrease uniformity of the molded product. Consequently, non-uniformity of swelling and poor appearance tend to occur. Accordingly, it is advisable to select a molding material and molding conditions that provide the weight average fiber length within the foregoing range. By the way, the weight average fiber length can be measured with a digitizer using an image obtained by, in case of glass fibers, ashing a part of a molded product and directly photographing the resulting product through a universal projector with 10 x magnification.

In the shock absorbing member of the invention, the average porosity of the plate portion is, as noted earlier, 5 to 90 %, preferably 10 to 80 %. The substantial characteristic feature of the shock absorbing member of the invention is that the plate portion contains pores. The pores can prevent occurrence of sinkmark in a position corresponding to a rib on the surface of the plate portion and occurrence of warpage of the plate portion. Besides, occurrence of the pores is ascribable to recovery of entanglement of the fibers contained, not to a foaming agent. Thus, there is no phenomenon of poor appearance which is caused by silver generated owing to leak of a gas formed from a foaming agent on a surface of a molded product. The presence of the pores is attained by, as mentioned above, a molded product containing 10 to 60 % by weight of fibers (glass fibers) having a weight average fiber length of 1 to 20 mm. This is provided by a combination of selection of a molding material and employment of a molding method as will be described later.

Accordingly, the shock absorbing member of the invention is improved as a whole in bending properties and shock resistance properties with the same weight in comparison with a member free of pores. That is, the weight of the shock absorbing member can be more reduced to obtain the same bending strength and the like. Further, the heat resistance and the dimensional stability to heat are also satisfied by the selection of the fibers. Although the weight reduction and these strength characteristics are usually inconsistent, they are rendered consistent, and the bending properties per unit weight are markedly improved as compared with ordinary materials, thereby making it possible to contribute toward the weight reduction of automobiles by applying to an automobile interior member.

A process for producing the shock absorbing member of the invention is described in detail below along with the molding material.

The shock absorbing member of the invention uses a resin molding material comprising a thermoplastic resin and fibers such as glass fibers or the like as main components.

Especially, as the resin molding material, it is preferred to use a resin molding material having a total length of 3 to 100 mm, preferably 5 to 50 mm and comprising only fiber-reinforced thermoplastic resin pellets containing 10 to 90 % by weight of fibers having a length equal to this total length and arrayed in parallel to one another or a mixture of the pellets and other pellets containing 10 to 60 % by weight, based on the whole, of the above-mentioned fibers. The other pellets herein are usually fibers containing the same thermoplastic resin or this resin and various additives. The selection of this preferable resin molding material pellets can easily provide a melt-kneading resin excellent in melt-swelling property within an injection-molding mold cavity.

When the fiber content in the fiber-containing thermoplastic resin herein is less than 10 % by weight, the melt-swelling property is insufficient, and effects of improving properties of fibers, such as strength, rigidity and the like, cannot be expected. Further, when it exceeds 60 % by weight, melt-kneading property and dispersibility of fibers are decreased, and stability of qualities such as injection moldability, swelling property, appearance of a molded product, uniformity and the like is sometimes decreased.

The thermoplastic resin used in the invention is not particularly limited, and those mentioned above are available. Further, these thermoplastic resins can contain, as required, acid-modified polyolefin resins which are modified with unsaturated carboxylic acids such as maleic anhydride, fumaric acid and the like or derivatives thereof and further, shock resistance improvers such as elastomers or the like, stabilizers, antistatic agents, weathering agents, light stabilizers, colorants, short fibers, fillers such as talc and the like, and so forth.

Moreover, the fibers can be selected, as required, from the above-mentioned in view of properties required of the shock absorbing member. Among others, glass fibers, carbon fibers, metallic fibers and the like are preferable because they are excellent in strength, rigidity and heat resistance, are long fibers, make easy the draw-molding by dipping in a molten resin and have swelling property. Glass fibers are used especially preferably.

As the glass fibers herein, glass fibers such as E-glass, S-glass and the like, having the average fiber diameter of 25 µm or less, preferably 3 to 20 µm can preferably be employed. When the diameter of the glass fibers is less than 3 µm, the glass fibers are incompatible with a resin in production of pellets through the draw-molding by dipping in a molten resin, and the dipping in a resin becomes difficult. Meanwhile, when it exceeds 20 µm, the appearance is decreased, and the fibers tend to less flow and to be broken or damaged in the melt-kneading. When pellets are produced by the draw-molding method or the like using the thermoplastic resin and the glass fibers, it is advisable that the glass fibers are surface-treated with a coupling agent and then bundled with a bundling agent in the range of 100 to 10,000 fibers, preferably 150 to 5,000 fibers.

The coupling agent can be selected, as required, from ordinary coupling agents such as so-called silane coupling agents and titanium coupling agents. For example, amino silanes and epoxy silanes such as γ-aminopropyltriethoxysilane, N-β-(aminoethyl)-γ-aminopropyltrimethoxysilane, γ-glycidoxypropyltrimethoxysilane, β-(3,4-epoxycyclohexyl)ethyltrimethoxysilane and the like can be employed. Especially, the aminosilane compounds are preferably employed.

As the bundling agent, for example, urethane, olefinic, acrylic, butadiene and epoxy bundling agents can be employed. Of these, urethane and olefinic bundling agents can preferably be employed. With respect to the urethane bundling agent of these, one-pack types such as an oil modification type, a moisture-curing type, a block type and the like and two-pack types such as a catalyst-curing type, a polyol-curing type and the like can both be usually employed so long as a polyisocyanate obtained by a polyaddition reaction of a diisocyanate compound and a polyhydric alcohol is contained at a ratio of 50 % by weight or more. On the other hand, as the olefinic bundling agent, a modified polyolefin resin modified with unsaturated carboxylic acids or derivatives thereof can be employed.

The fiber-containing resin molding material used in the production of the shock absorbing member of the invention is not particularly limited so long as it has melt-swelling property. However, fiber-reinforced resin pellets reinforced with glass fibers by dipping glass fibers bundled with the bundling agent in a thermoplastic resin by adhering are preferably used. As a method in which glass fibers are dipped in a thermoplastic resin by adhering, a method in which a fiber bundle is passed through a molten resin to dip the fibers in the resin, a method in which a fiber bundle is passed through a coating dye for dipping, a method in which a molten resin adhered around fibers is spread and a fiber bundle is dipped therein by a die, and the like can be employed. In this case, in order to make the fiber bundle compatible with the resin or improve wettability, a draw-molding method can be employed in which a fiber bundle tensioned is drawn by being passed through an inside of a die having raised and depressed portions on an inner periphery to dip the fiber bundle in the molten resin and a step of thereafter pressing the fiber bundle with a pressure roller is further employed. By the way, when the glass fibers and the molten resin are well compatible with each other and have good wettability, the glass fibers are easily dipped in the molten resin to expedite the production of the pellets. Therefore, a step of bundling the fibers with the bundling agent can sometimes be omitted. As a method in which these are rendered compatible with each other, a method in which polarity is imparted to a resin or a method in which a functional group reactive with a coupling agent is grafted on surfaces of glass fibers is effective.

When the long fiber bundle (strand or the like) dipped in the resin by the foregoing method is cut along the longitudinal direction of the fibers, fiber-reinforced resin pellets containing long fibers having a length equal to the total length of the pellets can be obtained. At this time, the resin pellets may be not only pellets obtained by cutting a resin-containing long fiber bundle stranded and having a nearly circular sectional shape but also pellets obtained by cutting to a predetermined length a resin-containing long fiber bundle which is formed into a sheet, a tape or a band by arraying fibers in parallel.

Further, the fiber-containing thermoplastic resin molding material preferably used in the process for producing the shock absorbing member of the invention is, as mentioned above, preferably the fiber-reinforced thermoplastic resin pellets produced through the draw-molding by dipping in the molten resin, having the total length of 3 to 100 mm, preferably 5 to 50 mm and containing 10 to 90 % by weight of the fibers having the length equal to this total length and arrayed in parallel to one another or the mixture of the above-mentioned pellets and other pellets containing 10 to 60 % by weight, based on the whole, of the foregoing fibers.

When the fiber-reinforced thermoplastic resin pellets containing 10 to 90 % by weight, based on the whole, of the fibers arrayed in parallel to one another are used, the glass fibers are hardly broken even in plasticization, melting and kneading with a screw of an injection-molding machine because they are dipped in and coated with the molten resin, and the dispersibility is also good. Consequently, a spring back phenomenon of the fiber-containing thermoplastic resin after injected into a mold cavity becomes good, and the length of the fibers remaining in the final molded product is increased. Thus, properties and surface appearance are improved. When the mixture with other pellets are used herein, there are merits that the amounts of the glass fiber-reinforced thermoplastic resin pellets having a high concentration are decreased which is economical and the fiber content in the molded product and the melt viscosity can be adjusted.

Next, an example in which a polypropylene resin is used as a thermoplastic resin and glass fibers as fibers is specifically described. MI (melt index) of the polypropylene resin is not particularly limited. MI (measured at a temperature of 230°C under load of 2.16 kg according to JIS K7210) as a whole is 5 to 1,000 g/10 min, preferably 10 to 600 g/10 min. A resin molding material made of glass fiber-containing polypropylene resin master pellets, especially a mixture of the foregoing glass fiber-reinforced polypropylene resin pellets and the polypropylene resin pellets is usually employed. Accordingly, with respect to the polypropylene resin pellets and the polypropylene resin pellets for dilution of glass fibers in the glass fiber-containing polypropylene resin master pellets, pellets different in MI can freely be used naturally, and can be determined, as required, in consideration of a size, use and the like of an automobile, properties of the shock absorbing member such as bending strength, bending rigidity, shock resistance, heat resistance, dimensional stability to heat and the like, and moldability.

However, in the shock absorbing member of the invention, it is required that the mold cavity in the molding is relatively thin, the glass fibers having a relatively long fiber length are contained and moldability, namely, melt flowability is good. Consequently, with respect to MI of the polypropylene resin for dilution, a polypropylene resin having relatively high MI of 30 to 1,000 g/10 min, preferably 40 to 800 g/10 min can be selected as required. In the ordinary injection molding, when this polypropylene resin having the high MI was used in consideration of flowability of a molten resin, shock resistance was notably decreased, and this was not practical. Thus, the upper limit of MI was naturally restricted.

In the shock absorbing member of the invention, MI of the polypropylene resin can be relatively higher than MI in the ordinary general injection-molding method, that is, the molecular weight can be decreased much to improve moldability. Besides, quite satisfactory properties such as strength, heat resistance and the like as the shock absorbing member of the invention which is lightweight though can be provided by the presence of the glass fibers, the entanglement of the glass fibers, the random distribution of the glass fibers, the formation of the dense surface layer, the formation of pores by the fibers and the resin and the like. Further, the excellent appearance is provided without sinkmark and warpage.

In case of, for example, the polypropylene resin used in the invention, a homopolypropylene resin, or for shock resistance, a block copolymer of propylene and other olefins and a random copolymer of propylene and less than some percent by weight of other olefins are preferable. For further improving shock resistance, it is also possible to contain a thermoplastic resin elastomer or an amorphous or low-crystallinity polypropylene resin as required.

Examples of the thermoplastic elastomer herein include olefinic elastomers such as an ethylene·propylene copolymer elastomer (EPR), an ethylene·butene-1 copolymer elastomer, an ethylene·octene-1 copolymer elastomer, an ethylene·propylene·butene-1 copolymer elastomer, an ethylene·propylene·diene copolymer elastomer (EPDM), an ethylene·propylene·ethylidenenorbornene copolymer elastomer, soft polypropylene, a soft polypropylene copolymer and the like. In case of the ethylenic elastomers of these, the ethylene content is usually 40 to 90 % by weight. As the elastomers, those having a Mooney viscosity (ML₁₊₄100) of, usually 5 to 100, preferably 10 to 60 are used.

Further, examples of the styrenic elastomers can include a styrene-butadiene copolymer elastomer, a styrene·isoprene copolymer elastomer, a styrene-butadiene-isoprene copolymer elastomer, a styrene·ethylene·butylene·styrene copolymer elastomer (SEBS) and a styrene-ethylene-propylene-styrene copolymer (SEPS) which are obtained by hydrogenating these copolymers completely or partially, and the like. As the elastomers, those having melt index (MI) [measured at 200°C under load of 5 kg according to JIS K7210] of 0.1 to 120 g/10 min, preferably 8 to 100g/10 min are used.

Next, as the glass fibers, those having various fiber lengths are used, and the weight average glass fiber length in the molded product as the shock absorbing member of the invention is in the range of 1 to 20 mm, especially 2 to 15 mm. Accordingly, so long as the weight average fiber length of the glass fibers in the molded product secures this range, the molding material is not particularly limited. However, in order to maintain the glass fiber length in the molded product at at least a certain level, it is generally preferred, as stated earlier, to use the glass fiber-reinforced thermoplastic resin pellets of which the total length is 3 to 100 mm, preferably 5 to 50 mm and in which the glass fibers having the length equal to this total length are arrayed in parallel to one another and the glass fiber content is 10 to 90 % by weight.

The fiber (glass)-containing thermoplastic resin molding material used to produce the shock absorbing member of the invention can be molded into the shock absorbing member in which the average porosity of the plate portion is 5 to 90 % by an inflation phenomenon owing to recovery of entanglement of the fibers (glass) present in the melting. By the way, the shock absorbing member of the invention may contain pores even in the lattice rib portion other than the plate portion. Accordingly, the shock absorbing member of the invention is substantially achieved by the inflation phenomenon due to recovery of resilience (spring back) in molding the fibers (glass). Nevertheless, a small amount of a foaming agent can be used to aid in inflation. The foaming agent herein is not particularly limited. Examples thereof include chemical foaming agents that generate a gas through decomposition with heat at melting temperatures of respective resin starting materials, such as azodicarbonamide (ADCA), benzenesulfohydrazide, N,N-dinitropentamethylenetetramine, terephthalazide and the like, and physical foaming agents such as pentane, butane and the like.

These foaming agents can usually be added as a masterbatch of a foaming agent and a thermoplastic resin. The amount of the foaming agent is usually 0.01 to 1 part by weight, preferably 0.05 to 0.5 part by weight per 100 parts by weight in total of the glass fiber-reinforced thermoplastic resin pellets and the thermoplastic resin pellets for dilution. The amount of the foaming agent added is indeed for supplementary use to secure the inflation in the initial increase of the capacity of the mold cavity, and it can be determined, as required, in consideration of the inflation by the glass fibers. When the amount of the foaming agent herein is as large as in the general foam-molding, a gas tends to be leaked on the surface of the molded product to provide poor appearance such as occurrence of silver or the like.

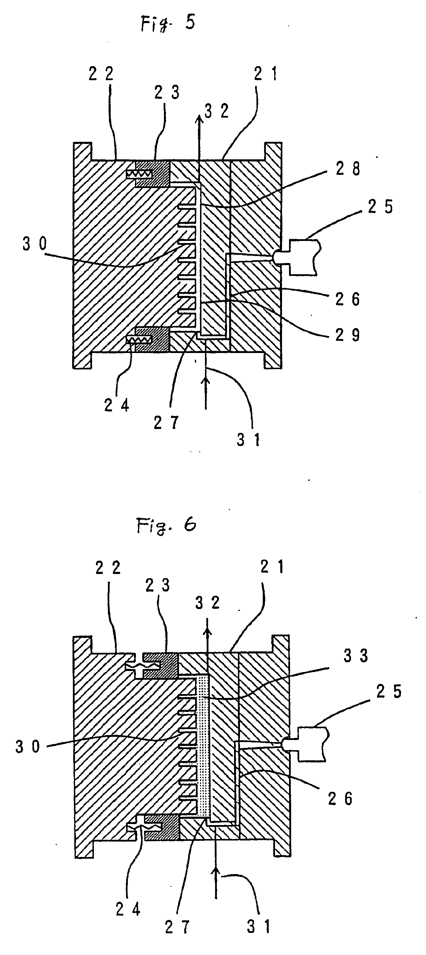

Next, a process for producing the shock absorbing member of the invention is described by referring to the drawings. Fig. 5 is a conceptual view of a main part of a mold for molding a shock absorbing member, showing a fiber-containing molten resin when injection-filled. Fig. 6 is a view when a step of inflation by widening a mold cavity is completed.

In Figs. 5 and 6, 21 is a fixed mold, 22 a movable mold, 23 a spacer, 24 a spring, 25 an injection nozzle, 26 a hot runner, 27 a gate, 28 a mold cavity, 29 a plate portion, 30 a lattice-form rib, 31 a gas injection tube, 32 a gas exhaust tube, and 33 a shock absorbing member respectively. For molding the shock absorbing member of the invention, as is clear from Fig. 5, it is required that the capacity of the mold cavity 28 can be changed. Usually, the thickness of the cavity in the opening/closing direction of the mold can be changed. That is, an injection-molding machine having a function to reciprocate the movable mold 22 is used. As this injection-molding machine, a molding machine that enables injection compression molding or a general injection-molding machine equipped with a movable mold moving device is generally used.

In the production of the shock absorbing member of the invention, as shown in Fig. 5, clamping is conducted such that the movable mold 22 advances toward the fixed mold 21. By this clamping, the spacer 23 pushes the spring 24 to construct a mold surface of the mold cavity 28. Then, a fiber-containing molding material not shown is melt-kneaded, plasticized and weighed with a screw, and injection-filled in the mold cavity 28 via the injection nozzle 25, the hot runner 26 and the gate 27. In this case, injection compression can also be employed in which the capacity of the mold cavity is increased by the initial clamping to make the amount of the injection resin less than 2/3 of the capacity of the mold cavity, and the movable mold 22 advances again after the start-up of injection-filling to compress the molten resin and fill the same in the overall mold cavity.

In this injection compression, the injection resin pressure is low, and the orientation of the resin and the fibers less occurs or does not occur substantially. Further, by employing the injection compression, filling can easily be conducted even when the space of the mold cavity is small. At any rate, by the injection filling or the injection compression filling, cooling of the surface portion of the molded product is started by the mold, and even fine raised and depressed portions on the surface of the mold are completely transferred.

After the surface is cooled to some extent to form the skin layer, the movable mold 22 is, as shown in Fig. 6, inflated by being retreated up to the position of the space of the mold cavity which is the thickness of the plate portion of the molded product. At this time, the spacer 23 remains pressed against the fixed mold by the spring 24. That is, in the example shown, the outer peripheral wall of the molded product remains injection-filled and shaped, and is not influenced by the retreat of the movable mold. Subsequently, the shock absorbing member is formed by cooling, and withdrawn by opening the movable mold 22. Incidentally, the compression in the injection compression molding step can be controlled by controlling the position of the space of the mold cavity and by the compression force.

Although the process for producing the shock absorbing member of the invention is basically the foregoing process, a nitrogen gas or the like can be injected from the gas injection tube 31 after starting the retreat of the movable mold 22. The injection of the gas aids in the inflation by the glass fibers, and contributes toward further improving mold transferability and appearance by pressing the molded product against the mold surface after the inflation.

Further, the cooling of the plate portion can be prompted by exhausting an injection gas from a gas exhaust tube 32 while controlling a pressure of the injection gas to a certain level as required and circulating the gas within the molded product. This makes it possible to cool the molded product from the inside thereof instead of such an inconvenience that the molded product heat-insulated by the formation of pores has to be cooled with the mold, and greatly contributes toward improvement of the molding cycle. Incidentally, although the injection gas is not particularly limited, an inert gas such as a nitrogen gas, an argon gas or the like is preferably used. Further, the gas pressure is selected in the range of 0.01 to 20 MPa, preferably in the range of 0.1 to 5 MPa.

Moreover, the gas is usually a gas of room temperature. A cooling gas having a temperature of 15°C or less, preferably 0°C or less can also be employed. At this time, when a liquid such as volatile water or the like is entrained, a cooling efficiency is more improved. The gas can be injected into the fiber-containing molten resin from a gas nozzle formed within a nozzle of an injection device for plasticizing and injecting the molten resin or a gas nozzle or a gas pin opened in any of a sprue, a runner and a cavity formed inside the mold. It is preferred to inject the same from, among these, a gas pin formed in the mold.

By the way, as the movable mold, besides a mold in which the whole main part of the plate portion of the shock absorbing member is retreated and inflated, a mold having a portion that is not retreated as required, and a mold that is retreated at multiple stages are also available. In this case, in the plate portion, the porosity after inflation of respective portions can be changed by partially changing the thickness in the injection-filling. Further, a metallic member for installation can also be inserted in an installing portion. Still further, in an automobile door trim or the like, skin integral molding can also be conducted in which a skin material such as a soft resin, a thermoplastic elastomer, a synthetic leather, a woven fabric, a nonwoven fabric or the like is partially arranged on a necessary portion of a mold.

Moreover, in the foregoing molding example, the lattice rib was disposed on the movable mold. Accordingly, in order to avoid the decorative surface in the injection of the resin to the cavity, the gate was provided at the end, and a hot runner-type mold was therefore used. However, it is also possible that a movable mold moving device is disposed on the side of the fixed mold. In this case, when a movable mold moving device having a penetration hole is used, the decorative surface can be placed on the side opposite to the side of the fixed mold, and the molding can be conducted from the reverse surface with a direct runner.

The shock absorbing member of the invention is not limited in its use mode. That is, it is considered that the plate portion and the lattice rib are integrated to make use of strength, rigidity and the like of the plate portion. Nevertheless, it is preferably used in an automobile interior member requiring good appearance, especially an automobile door trim or the like. Examples of the automobile internal material can include, other than the door trim, an arm rest, a pillar, a side garnish, a dash board, a console box and the like.

The effects of the invention are described below by referring to specific Examples. However, the invention is not limited to these Examples at all.

### [Example 1]

Glass fiber-reinforced polypropylene resin pellets (containing 3 % by weight of maleic anhydride-modified polypropylene: MI = 30 g/10 min) in which the glass fibers (diameter: 13 µm) were arrayed in parallel, the fiber content was 30 % by weight and the length was 16 mm were used as a resin molding material. In an injection-molding machine, a screw having a clamping force of 1,000 t and a compression ratio of 1.8 for minimizing breakage of glass fibers was used. It is an injection-molding apparatus having a mold structure fitted with an IPM unit (Idemitsu Petrochemical Co., Ltd.) for reciprocating a movable mold in order to change a capacity of a mold cavity. By the way, the mold was fitted with an equipment for injecting and exhausting a nitrogen gas into and out of the cavity.

A mold had a size of 1,000 mm x 700 mm x variable thickness, and lattice-form ribs had a height of 50 mm, a thickness of 2 mm and a rib spacing of 50 mm.

After the molding material was melt-kneaded, plasticized and weighed, the molten resin (resin temperature: 240°C) was injected into the mold cavity clamped such that the thickness of the plate portion of the mold cavity reached 3 mm. As soon as the injection was completed, the movable mold was advanced to compress the molten resin for 3 seconds (800 t) and completely fill the same. At this time, the space of the mold cavity was approximately 1 mm. Immediately after the completion of the compression, the movable mold was retreated such that the space of the mold cavity reached 3 mm, and the molten resin was swelled. After the movable mold started retreating, a nitrogen gas of 3 MPa was injected from a gas injection pin for 10 seconds. The molded product was cooled, and the movable mold was then opened to withdraw the shock absorbing member. The weight average fiber length of the glass fibers in the molded product was 4.1 mm.

In the plate portion of the molded product, the molten resin corresponding to a thickness of 1 mm was only used as in Comparative Example 1. The molten resin was swelled to a thickness of approximately 3 mm, and the weight was substantially unchanged. However, the decorative surface of the molded product was free from sinkmark and occurrence of warpage as a whole. Thus, appearance was excellent. Further, the resin was completely filled even in the end of the rib of the molded product, and rigidity was provided as a whole. Thus, the lattice rib cushioned shock.

The resulting shock absorbing member was mounted on an iron plate with the flat surface up, and a steel ball having a diameter of 200 mm was collided against the same at a collision rate (7 m/s) to evaluate the shock absorbing property. As a result, the maximum load was 3 tons or more. Further, the deformation amount was 45 mm, and the lattice portion was not completely destroyed and could fully endure shock.

### [Example 2]

A shock absorbing member was molded in the same manner as in Example 1 except that in the size of the lattice rib of the mold, the height was 50 mm, the thickness was 1.5 mm and the rib spacing was 25 mm. Incidentally, the weight average fiber length of the glass fibers in the molded product was 3.8 mm. The shock absorbing member was excellent without sinkmark and warpage as in Example 1. The shock absorbing property was evaluated as in Example 1. Consequently, the maximum load was 2 tons or more. Further, the deformation amount was 30 mm, and the lattice portion was not completely destroyed and could fully endure shock.

### [Comparative Example 1]

A shock absorbing member was molded as in Example 1 except that a step of inflation by retreating a movable mold after compression of a molten resin was not conducted. In a decorative surface of the shock absorbing member, sinkmark was observed in the rib portion, and warpage deformation was observed as a whole.

### [Comparative Example 2]

A shock absorbing member was molded as in Comparative Example 1 except that a polypropylene resin (MI = 30 g/10 min: 230°C, load 2.16 kg) containing 20 % by weight of talc (average particle diameter: 3.2 µm) was used as a molding material and a mold was clamped such that a space of a mold cavity of a plate portion reached 2 mm. Although the thickness of the plate portion was 2 mm, large sinkmark occurred on the decorative surface of the shock absorbing member. Warpage deformation was not observed in the product, but the weight was increased.

### [Comparative Example 3]

A shock absorbing member was molded as in Comparative Example 2 except that a space of a cavity of a plate portion was set at 1 mm. Sinkmark and warpage deformation were generated on the decorative surface of the shock absorbing member, and the resin could not be filled in the end of the rib.

### Industrial Applicability

The shock absorbing member of the invention is excellent in appearance and dimensional stability without sinkmark on a decorative surface and warpage on a plate portion. Besides, strength and rigidity can be secured without increasing the weight of the plate surface, and a shock absorbing effect is provided by lattice-form ribs. Consequently, it can be applied to an automobile interior member, especially a door trim or the like. Further, in comparison with an ordinary case in which a door trim and a shock absorbing member are separately produced, assembled and combined, productivity and economics are excellent because molding can be conducted by integral injection molding. In addition, it is demanded as a shock absorbing member.

## Claims

1. A shock absorbing member which is an integrally molded product comprising a plate portion and lattice-form ribs on a reverse surface of the plate portion and formed of a fiber-containing thermoplastic resin, an average porosity of the plate portion being 5 to 90 %.

2. The shock absorbing member as claimed in claim 1, wherein the fiber content is 10 to 60 % by weight, and the weight average fiber length is 1 to 20 mm.

3. The shock absorbing member as claimed in claim 1 or 2, wherein the thickness of the lattice rib is 0.5 to 3 mm, the lattice spacing is 10 to 80 mm, and the height is 5 to 100 mm.

4. The shock absorbing member as claimed in any of claims 1 to 3, wherein the fibers are glass fibers, and the thermoplastic resin is a polypropylene resin.

5. The shock absorbing member as claimed in any of claims 1 to 4, which is obtained by injection-molding a resin molding material comprising fiber-reinforced thermoplastic resin pellets having a total length of 3 to 100 mm and containing 10 to 90 % by weight of fibers having a length identical to this total length and arrayed in parallel with one another.

6. An automobile interior member formed of the shock absorbing member as claimed in any of claims 1 to 5.

7. An automobile door trim formed of the shock absorbing member as claimed in any of claims 1 to 5.
